# EUROPÄISCHE PATENTSCHRIFT

(11) **EP 0 854 809 B1**
(45) Veröffentlichungstag und Bekanntmachung des Hinweises auf die Patenterteilung: **01.10.2003**
(21) Anmeldenummer: 96924770.9
(22) Anmeldetag: 25.07.1996
(51) Int. Cl.: B60T 13/68

(54) **HYDRAULIKAGGREGAT, INSBESONDERE FÜR EINE SCHLUPFGEREGELTE FAHRZEUGBREMSANLAGE UND VERFAHREN ZU DESSEN HERSTELLUNG**
HYDRAULIC UNIT, PARTICULARLY FOR A SLIP-CONTROLLED VEHICLE BRAKE SYSTEM AND PROCESS FOR THE PRODUCTION THEREOF
UNITE HYDRAULIQUE, NOTAMMENT POUR UN SYSTEME DE FREINAGE DE VEHICULE AVEC DISPOSITIF ANTIPATINAGE ET PROCEDE DE FABRICATION CORRESPONDANT

(30) Priorität: 27.10.1995 DE 19540040
(43) Veröffentlichungstag der Anmeldung: 29.07.1998
(73) Patentinhaber: ROBERT BOSCH GMBH, 70442 Stuttgart (DE)
(72) Erfinder: MEGERLE, Friedrich, D-71679 Asperg (DE); SCHNALZGER, Guenther, D-87544 Blaichach (DE); KIRSCHNER, Martin, D-87549 Rettenberg (DE)
(86) Internationale Anmeldenummer: DE9601372
(87) Internationale Veröffentlichungsnummer: WO97016335

(56) Entgegenhaltungen:
- DE-A- 4 030 571
- DE-A- 4 332 538

## Beschreibung

### Stand der Technik

Die Erfindung geht aus von einem Hydraulikaggregat nach der Gattung des Hauptanspruchs, das insbesondere für eine schlupfgeregelte Bremsanlage eines Kraftfahrzeugs vorgesehen ist.

Ein derartiges Hydraulikaggregat ist bekannt beispielsweise aus der DE 43 32 538 A1. Das bekannte Hydraulikaggregat weist einen Hydraulikblock mit einer Aufnahmebohrung für ein Magnetventil auf, in die ein Magnetventil mit seinem hydraulischen Teil eingesetzt ist. Durch Kanäle, die in die Aufnahmebohrung münden, ist das Magnetventil mit weiteren hydraulischen Komponenten der Fahrzeugbremsanlage hydraulisch verschaltet, die teils ebenfalls im Hydraulikblock aufgenommen und im übrigen extern angeordnet und mit Fluidleitungen an den Hydraulikblock angeschlossen sind. Zur Befestigung des Magnetventils in der Aufnahmebohrung ist Werkstoff des Hydraulikblocks im Mündungsbereich der Aufnahmebohrung einen Flansch des Magnetventils übergreifend verstemmt. Das Magnetventil ist auf diese Weise starr in der Aufnahmebohrung gehalten. Nach dem Verstemmen wird eine hohlzylindrische Magnetspule zur Betätigung des Magnetventils auf einen aus dem Hydraulikblock vorstehenden Magnetteil des Magnetventils aufgesteckt.

Durch kleine Abweichungen von der Ideallage des Magnetventils in der Aufnahmebohrung beim Verstemmen und durch das Verstemmen kann es dazu kommen, daß das Magnetventil im Inneren der Aufnahmebohrung gegen eine Umfangswand der Aufnahmebohrung drückt. Infolge wechselnder Beanspruchung des Magnetventils durch schwankenden Fluiddruck beim Betrieb des Hydraulikaggregats kommt es zu einer Werkstoffverdrängung an der Stelle, an der das Magnetventil gegen die Umfangswand drückt, das Magnetventil "gräbt sich in die Umfangswand der Aufnahmebohrung ein". Diametral gegenüber der Stelle, an der das Magnetventil Werkstoff des Hydraulikblocks verdrängt, vergrößert sich ein Radialspalt zwischen dem Magnetventil und der Umfangswand der Aufnahmebohrung, wobei die Zunahme des Radialspiels ein mehrfaches des ursprünglichen Durchmesserspiels zwischen dem Magnetvenitl und der Aufnahmebohrung an dieser Stelle erreichen kann. In den vergrößerten Radialspalt kann eine Dichtmanschette plastisch hineinfließen ("extrudieren"), die zwischen einer Einlaßseite und einer Auslaßseite des Magnetventils abdichtet, was zum Versagen der Dichtmanschette und damit des Magnetventils führt.

### Vorteile der Erfindung

Das Magnetventil des erfindungsgemäßen Hydraulikaggregats mit den Merkmalen des Hauptanspruchs ist in der Aufnahmebohrung des Hydraulikblocks mit radialem Spiel und/oder mit Schwenkspiel zu einer Längsachse der Aufnahmebohrung gehalten. Dadurch werden Montagefehler beim Anbringen des Magnetventils in der Aufnahmebohrung vermieden. Es wird verhindert, daß das Magnetventil gegen die Umfangswand der Aufnahmebohrung drückt, eine Werkstoffverdrängung findet auch bei Wechselbelastung nicht statt. Die Größe des Radialspalts des Magnetventils in der Aufnahmebohrung bleibt dauerhaft auf einen Herstellungswert begrenzt, bei dem eine Dichtmanschette oder ein anderes Dichtelement nicht in den Radialspalt extrudiert. Einzuhaltende Montagetoleranzen sind größer, Montageausschuß infolge Verstemmens des Magnetventils in einer Lage, in der es gegen die Umfangswand der Aufnahmebohrung drückt, sind nahezu ausgeschlossen.

Die Unteransprüche betreffen vorteilhafte Ausgestaltungen und Weiterbildungen der im Hauptanspruch angegebenen Erfindung.

Zusätzlich kann das Magnetventil Spiel in axialer Richtung in der Aufnahmebohrung aufweisen (Anspruch 2).

In bevorzugter Ausgestaltung der Erfindung wird das Magnetventil mittels eines auf es aufgeschobenen Halterings in der Aufnahmebohrung gehalten, der beispielsweise durch Verstemmen von Werkstoff des Hydraulikblocks im Mündungsbereich der Aufnahmebohrung fest angebracht ist und der an einer Ringschulterfläche des Magnetventils angreift und das Magnetventil in axialer Richtung formschlüssig in der Aufnahmebohrung hält, wobei radiales Spiel zwischen dem Haltering und dem Magnetventil besteht (Anspruch 3).

Bei einer Ausgestaltung der Erfindung weist der Haltering einen hohlzylindrischen Kragen auf, der plastisch beispielsweise in eine umlaufende Nut des Magnetventils hineinverformt ist und dadurch eine dem Hydraulikblock zugewandte Nutwangenfläche des Magnetventils hintergreift (Anspruch 5). Auf diese Weise ist der Haltering vor der Montage des Magnetventils an diesem fixiert und nach dem Befestigen des Mangetventils in der Aufnahmebohrung dessen axiales Spiel begrenzt.

### Zeichnung

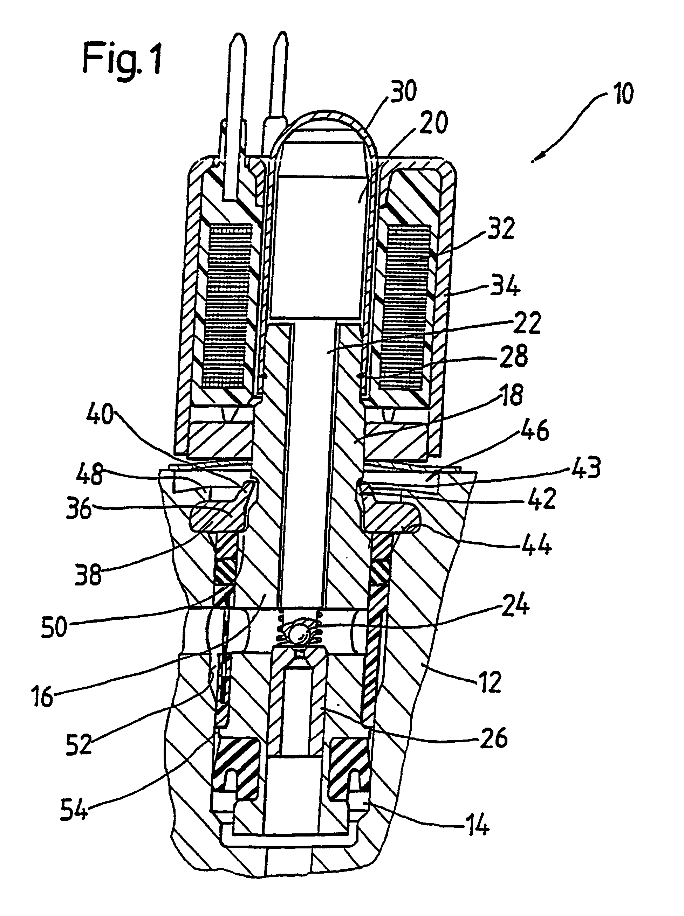

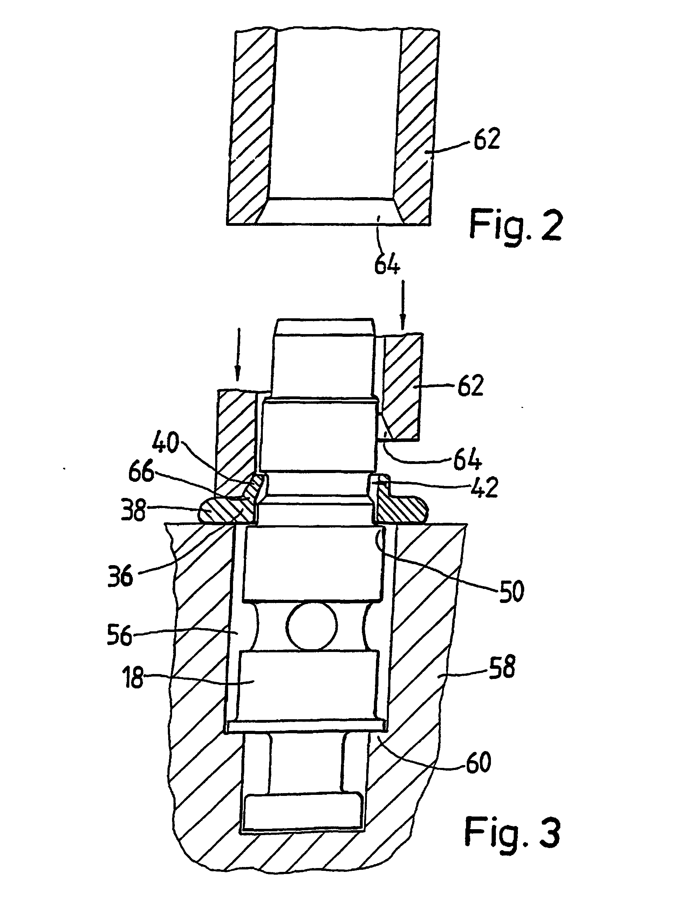

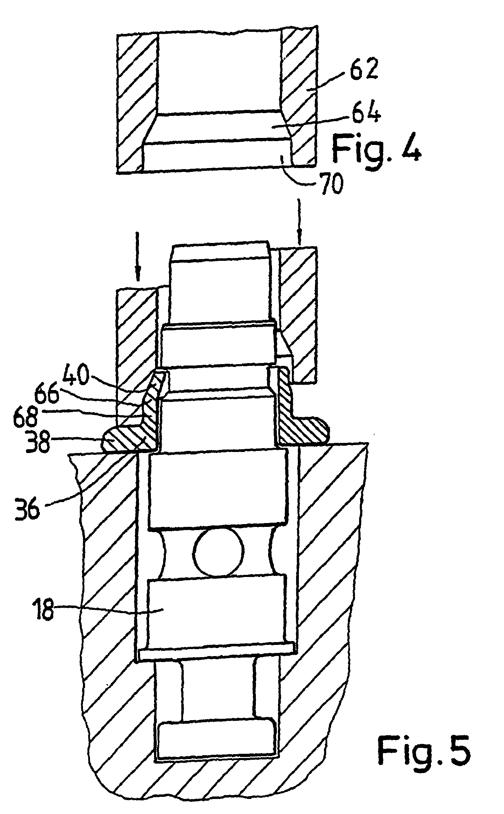

Die Erfindung wird nachfolgend anhand eines in der Zeichnung dargestellten Ausführungsbeispiels näher erläutert. Es zeigen Figur 1 einen Schnitt durch ein erfindungsgemäßes Hydraulikaggregat im Bereich eines Magnetventils, Figuren 2 und 4 je einen Umformstempel und Figuren 3 und 5 schematisiert das Anbringen eines Halterings an einem Ventilgehäuse.

### Beschreibung des Ausführungsbeispiels

Figur 1 zeigt ein erfindungsgemäßes Hydraulikaggregat 10 mit einem Hydraulikblock 12, in dem eine Aufnahmebohrung 14 für ein Magnetventil 16 angebracht ist. Das Hydraulikaggregat 10 ist zur Verwendung in einer schlupfgeregelten Fahrzeugbremsanlage vorgesehen. Der Hydraulikblock 12 dient der hydraulischen Verschaltung hydraulischer Komponenten der Bremsanlage. In ihm sind üblicherweise mehrere Magnetventile in Reihen nebeneinander sowie weitere hydraulische Komponenten wie Kolbenpumpen, Speicher- und Dämpferkammern untergebracht, von denen in Figur 1 nur ein Magnetventil 16 dargestellt ist.

Das Magnetventil 16 befindet sich mit einem hydraulischen Teil in der Aufnahmebohrung 14 des Hydraulikblocks 12, ein magnetischer Betätigungsteil des Magnetventils 16 steht aus dem Hydraulikblock 12 vor.

Das Magnetventil 16 umfaßt ein hohlzylindrisches Ventilgehäuse 18, einen Anker 20 an einer Stirnseite des Ventilgehäuses 18, von dem sich eine fest mit ihm verbundene Ankerstange 22 in das Ventilgehäuse 18 erstreckt, in deren freies Stirnende eine Kugel als Ventilschließkörper 24 eingepreßt ist. Der Ventilschließkörper 24 wirkt mit einem einen Ventilsitz aufweisenden Ventilsitzteil 26 zusammen, das von einer dem Anker 20 gegenüberliegenden Stirnseite in das Ventilgehäuse 18 eingepreßt ist. Der Anker 20 befindet sich in einem auf das Ventilgehäuse 18 aufgeschobenen und mit diesem durch Schweißung 28 verbundenen Ventildom 30. Auf den Ventildom 30 ist eine hohlzylindrische Spule 32 zur Betätigung des Magnetventils 16 aufgesteckt, die in einem Spulengehäuse 34 untergebracht ist. Die Spule 32 mit dem Spulengehäuse 34 wird erst auf das Magnetventil 16 aufgesteckt, nachdem dieses im Hydraulikblock 12 befestigt ist, was nachfolgend beschrieben wird. Da Magnetventile 16 der hier verwendeten Art dem Fachmann in vielerlei Ausführungen bekannt sind, wird hier nicht weiter auf Einzelheiten des Magnetventils 16 eingegangen.

Zur Befestigung des Magnetventils 16 in der Aufnahmebohrung 14 des Hydraulikblocks 12 dient ein Haltering 36, der das Ventilgehäuse 18 umschließt: Der Haltering 36 ist mit seinem Flansch 38 in eine Ringstufe 44 im Bereich einer Mündung 46 der Aufahmebohrung 14 eingesetzt und durch Verstemmen von Werkstoff 48 des Hydraulikblocks 12 fest mit dem Hydraulikblock 12 verbunden. Er weist einen stabilen Flansch 38 auf, mit dem ein konischer Kragen 40 geringer Wandstärke einstückig ist. Um das Magnetventil 16 in der Aufnahmebohrung 14 zu halten, ist eine Ringschulter 50 am Ventilgehäuse 18 vorgesehen, an der der Haltering 36 in axialer Richtung formschlüssig angreift. Der Kragen 40 steht in Richtung des aus der Aufnahmebohrung 14 des Hydraulikblocks 12 hervorstehenden, magnetischen Betätigungsteils des Magnetventils 16 vom Flansch 38 ab. Der Kragen 40 ist plastisch radial nach innen in eine umlaufende Nut 42 im Ventilgehäuse 18 hineinverformt, deren dem Hydraulikblock 12 zugewandte Nutwangenfläche 43 er hintergreift und dadurch eine Axialbeweglichkeit des Magnetventils 16 in die Aufnahmebohrung 14 hinein begrenzt. Zwischen dem Haltering 36 und dem Magnetventil 16 besteht Spiel in radialer und axialer Richtung.

Auf diese Weise wird vermieden, daß das Magnetventil 16 gegen eine Umfangswand 52 der Aufnahmebohrung 14 drückt und infolge einer Wechselbelastung, die aufgrund von Druckschwankungen von Hydraulikfluid auftritt, denen das Magnetventil 16 ausgesetzt ist, an der Druckstelle den üblicherweise weicheren Werkstoff des Hydraulikblocks 12 verdrängt und sich in die Umfangswand 52 der Aufnahmebohrung 14 "eingräbt". Durch die Befestigung des Magnetventils 16 mit radialem Spiel in der Aufnahmebohrung 14 vermeidet die Erfindung ein solches "Eingraben" in die Umfangswand 52 an einer Umfangsstelle und eine infolgedessen auftretende Vergrößerung eines Radialspalts 54 zwischen dem Magnetventil 16 und der Aunfahmebohrung 14 auf der der Druckstelle gegenüberliegenden Seite während des Betriebs des Magnetventils 16. Der Radialspalt 54 behält stets seine ursprüngliche Größe bei.

Die Anbringung des Halterings 36 am Ventilgehäuse 18 ist in Figur 3 dargestellt: Das Ventilgehäuse 18 wird in eine Bohrung 56 eines Gegenhalters 58 eingelegt, wobei es auf einer Ringstufe 60 des Gegenhalters 58 aufliegt. Der auf das Ventilgehäuse 18 aufgeschobene Haltering 36 liegt mit seinem Flansch 38 auf dem Gegenhalter 58 auf. Er stützt sich nicht gegen die Ringschulter 50 des Ventilgehäuses ab. Nachdem das Ventilgehäuse 18 in den Gegenhalter 58 eingelegt und der Haltering 36 auf das Ventilgehäuse 18 aufgeschoben ist, wird ein hohlzylindrischer Umformstempel 62, der in Figur 2 einzeln dargestellt ist, über das Ventilgehäuse 36 abgesenkt (rechte Hälfte von Figur 3). Der Umformstempel 62 weist einen sich in Richtung des Halterings 36 erweiternden Umforminnenkonus 64 an seiner Mündung auf, der den vor der Umformung hohlzylindrischen Kragen 40 des Halterings 36 plastisch radial nach innen zu einem Konus umformt (linke Bildhälfte in Figur 3).

Der Umformstempel 62 wird niedergedrückt, bis er gegen den Flansch 38 des Halterings 36 stößt. Durch dessen Auflage auf dem Gegenhalter 58 wird die Kraft zum Niederdrücken des Umformstempels 62 vom Gegenhalter 58 aufgenommen und nicht in das Ventilgehäuse 18 eingeleitet. Der Durchmesser des Umforminnenkonus 64 ist so gewählt, daß er den Kragen 40 des Halterings 36 unter Belassung eines Radialspiels in die Nut 42 des Ventilgehäuses 18 hineinverformt. Das Ventilgehäuse 18 ist mit Spiel in radialer und in axialer Richtung im Haltering 36 gehalten. Eine wesentliche Verringerung der Wandstärke des Halterings 36 von seinem stabilen Flansch 38 zum Kragen 40 ergibt eine umlaufende Sollbiegestelle 66 am Übergang vom Flansch 38 zum Kragen 40. Der Flansch 38 wird beim Anbringen des Halterings 36 am Ventilgehäuse 18 nicht verformt.

Figur 5 zeigt einen abgewandelten Haltering 36. Bei diesem Haltering 36 befindet sich zwischen dem Flansch 38 und dem Kragen 40 ein Hohlzylinderabschnitt 68, der bei der Umformung des Kragens 40 nicht verformt wird. Auch bei dieser Ausführungsform veringert sich die Wandstärke des Halterings 36 am Übergang von dem nicht zu verformenden Hohlzylinderabschnitt 68 zum plastisch zu verformenden Kragen 40 unter Bildung einer umlaufenden Sollbiegestelle 66, um eine definierte Verformung ausschließlich des Kragens 40 zu erreichen.

Der Umformstempel 62 (Figur 4) weist für den in Figur 5 gezeigten Haltering 36 einen Innenzylinderabschnitt 70 auf, der den Umformstempel 62 über den Umforminnenkonus 64 hinweg fortsetzt und der den Umformstempel 62 am Hohlzylinderabschnitt 68 des Halterings 36 führt. Auf diese Weise ist die Führung des Umformstempels 62 verbessert, jedoch ist die Länge des Halterings 36 in axialer Richtung infolge des zwischen dem Kragen 40 und dem Flansch 38 befindlichen Hohlzylinderabschnitts 68 länger als bei der in Figuren 1 und 3 dargestellten Ausführungsform der Erfindung.

## Patentansprüche

1. Hydraulikaggregat mit einem eine Aufnahmebohrung aufweisenden Hydraulikblock, in die ein Magnetventil eingesetzt ist, **dadurch gekennzeichnet, daß** es eine am Hydraulikblock (12) angebrachte Ventilbefestigungseinrichtung (36) aufweist, die das Magnetventil (16) mit Spiel in radialer Richtung und/oder mit Schwenkspiel in der Aufnahmebohrung (14) hält.

2. Hydraulikaggregat nach Anspruch 1, **dadurch gekennzeichnet, daß** die Ventilbefestigungseinrichtung (36) das Magnetventil (16) mit Spiel in axialer Richtung in der Aufnahmebohrung (14) hält.

3. Hydraulikaggregat nach Anspruch 1 oder 2, **dadurch gekennzeichnet, daß** die Ventilbefestigungseinrichtung einen Haltering (36) aufweist, der am Hydraulikblock (12) fest angebracht ist, der das Magnetventil (16) umschließt und der in axialer Richtung formschlüssig am Magnetventil (16) angreift.

4. Hydraulikaggregat nach Anspruch 3, **dadurch gekennzeichnet, daß** der Haltering (36) durch Verstemmen in einem Mündungsbereich (46) der Aufnahmebohrung (14) am Hydraulikblock (12) befestigt ist.

5. Hydraulikaggregat nach Anspruch 3, **dadurch gekennzeichnet, daß** der Haltering (36) einen plastisch radial nach innen verformten Kragen (40) aufweist, der eine dem Hydraulikblock (12) zugewandte Fläche (43) des Magnetventils (16) hintergreift.

6. Hydraulikaggregat nach Anspruch 5, **dadurch gekennzeichnet, daß** der Haltering (36) am Übergang (66) zum Kragen (40) oder im gesamten Kragenbereich geschwächt ausgebildet ist.

7. Hydraulikaggregat nach Anspruch 6, **dadurch gekennzeichnet, daß** eine Wandstärke des Halterings (36) am Übergang zum Kragen (40) oder im gesamten Kragenbereich verringert ist.

8. Verfahren zum Anbringen eines Halterings nach einem der Ansprüche 5 bis 7 an einem Magnetventil, **dadurch gekennzeichnet, daß** ein Umforminnenkonus (64) in axialer Richtung auf den Kragen (40) des auf das Magnetventil (16) bzw. auf dessen Ventilgehäuse (18) aufgeschobenen Halterings (36) aufgeschoben wird, der den Kragen (40) in radialer Richtung plastisch nach innen verformt.

9. Verfahren nach Anspruch 8, **dadurch gekennzeichnet, daß** ein Durchmesser des Umforminnenkonus (64) so auf den Kragen (40) des Halterings (36) abgestimmt ist, daß nach Verformung des Kragens (40) ein definiertes Radialspiel zwischen dem Kragen (40) und dem Magnetventil (16) bzw. dessen Ventilgehäuse (18) besteht.

10. Verfahren nach Anspruch 8, **dadurch gekennzeichnet, daß** die Axialbewegung des Umformkonus (64) durch einen Flansch (38) des Halterings (36) begrenzt ist.

## Claims

1. Hydraulic assembly with a hydraulic block which has a receiving bore and into which a solenoid valve is inserted, **characterized in that** the said hydraulic assembly has a valve fastening device (36) which is attached to the hydraulic block (12) and which holds the solenoid valve (16) in the receiving bore (14) with play in the radial direction and/or with pivoting play.

2. Hydraulic assembly according to Claim 1, **characterized in that** the valve fastening device (36) holds the solenoid valve (16) in the receiving bore (14) with play in the axial direction.

3. Hydraulic assembly according to Claim 1 or 2, **characterized in that** the valve fastening device has a holding ring (36) which is firmly attached to the hydraulic block (12) and surrounds the solenoid valve (16) and which engages on the solenoid valve (16) positively in the axial direction.

4. Hydraulic assembly according to Claim 3, **characterized in that** the holding ring (36) is fastened to the hydraulic block (12) by caulking in a mouth region (46) of the receiving bore (14).

5. Hydraulic assembly according to Claim 3, **characterized in that** the holding ring (36) has a collar (40) which is plastically deformed radially inwards and which engages behind a surface (43) of the solenoid valve (16), the said surface facing the hydraulic block (12).

6. Hydraulic assembly according to Claim 5, **characterized in that** the holding ring (36) is designed to be weakened at the transition (66) to the collar (40) or in the entire collar region.

7. Hydraulic assembly according to Claim 6, **characterized in that** a wall thickness of the holding ring (36) is reduced at the transition to the collar (40) or in the entire collar region.

8. Method for attaching a holding ring according to one of Claims 5 to 7 to a solenoid valve, **characterized in that** a forming inner cone (64) is pushed in the axial direction and onto the collar (40) of the holding ring (36) pushed onto the solenoid valve (16) or onto its valve housing (18) and plastically deforms the collar (40) inwards in the radial direction.

9. Method according to Claim 8, **characterized in that** a diameter of the forming inner cone (64) is coordinated with the collar (40) of the holding ring (36) in such a way that, after the deformation of the collar (40), there is a defined radial play between the collar (40) and the solenoid valve (16) or its valve housing (18).

10. Method according to Claim 8, **characterized in that** the axial movement of the forming cone (64) is limited by a flange (38) of the holding ring (36).

## Revendications

1. Unité hydraulique comportant un bloc hydraulique muni d'un perçage de réception logeant une électrovanne,
**caractérisée par**
une installation de fixation de vanne (36) montée sur le bloc hydraulique (12), cette installation tenant l'électrovanne (16) avec du jeu dans la direction radiale et/ou avec du jeu de pivotement dans le perçage de réception (14).

2. Unité hydraulique selon la revendication 1,
caractérisèe en ce que
l'installation de fixation de vanne (36) maintient l'électrovanne (16) avec du jeu dans la direction axiale dans le perçage de réception (14).

3. Unité hydraulique selon l'une des revendications 1 ou 2,
**caractérisée en ce que**
l'installation de fixation de vanne comporte une bague de fixation (36) installée solidairement sur le bloc hydraulique (12) et qui entoure l'électrovanne (16) et coopère avec l'électrovanne (16) par une liaison de forme dans la direction axiale.

4. Unité hydraulique selon la revendication 3,
**caractérisée en ce que**
la bague de fixation (36) est fixée au bloc hydraulique (12) par matage dans la zone d'embouchure (46) du perçage de réception (14).

5. Unité hydraulique selon la revendication 3,
**caractérisée en ce que**
la bague de fixation (36) comporte une collerette (40) déformée plastiquement, radialement vers l'intérieur, cette collerette venant prendre derrière une surface (43) de l'électrovanne (16) du côté tourné vers le bloc hydraulique (12).

6. Unité hydraulique selon la revendication 5,
**caractérisée en ce que**
la bague de fixation (36) est affaiblie à la transition (66) vers la collerette (40) ou dans toute la zone de la collerette.

7. Unité hydraulique selon la revendication 6,
**caractérisée en ce que**
l'épaisseur de la paroi de la bague de fixation (36) est diminuée à la transition avec la collerette (40) ou dans toute la zone de la collerette.

8. Procédé de mise en place d'une bague de fixation selon l'une des revendications 5 à 7 sur une électrovalve,
**caractérisé en ce qu'**
on emmanche un cône intérieur de formage (64) dans la direction radiale sur la collerette (40) de la bague de fixation (36) emmanchée sur l'électrovanne (16) ou son boîtier d'électrovanne (18), ce cône déformant de manière plastique la collerette (40) radialement vers l'intérieur.

9. Procédé selon la revendication 8,
**caractérisé en ce que**
le diamètre du cône intérieur de formage (64) est défini par rapport à la collerette (40) de la bague de fixation (36) pour qu'après formage de la collerette (40) il subsiste un jeu radial défini entre la collerette (40) et l'électrovanne (16) ou son boîtier (18).

10. Procédé selon la revendication 8,
**caractérisé en ce que**
le mouvement axial du cône de formage (64) est limité par une bride (38) de la bague de fixation (36).
